# EUROPÄISCHE PATENTSCHRIFT

(11) **EP 1 663 736 B1**
(45) Veröffentlichungstag und Bekanntmachung des Hinweises auf die Patenterteilung: **13.12.2006**
(21) Anmeldenummer: 04765593.1
(22) Anmeldetag: 24.09.2004
(51) Int. Cl.: B60R 22/12, D03D 1/00

(54) **Gewebtes Gurtband**
Wowen strap
Sangle tissée

(30) Priorität: 24.09.2003 DE 10344334
(43) Veröffentlichungstag der Anmeldung: 07.06.2006
(73) Patentinhaber: Berger, Johann, 73553 Alfdorf (DE)
(72) Erfinder: BERGER, Johann, 73553 Alfdorf (DE); CELIK, Murat, 73525 Schwäbisch Gmünd (DE)
(74) Vertreter: Fischer, Matthias
(86) Internationale Anmeldenummer: PCT/EP2004/010752
(87) Internationale Veröffentlichungsnummer: WO 2005/030540

(56) Entgegenhaltungen:
- DE-A- 2 508 728
- DE-A- 10 205 937
- DE-A- 10 209 695
- DE-U- 20 017 823
- US-A- 4 004 616
- US-A1- 2002 037 755

## Beschreibung

Die vorliegende Erfindung betrifft ein gewebtes Gurtband, insbesondere für Sicherheitsgurte in Kraftfahrzeugen.

Gewebtes Gurtband, auch zur Verwendung bei Sicherheitsgurten in Kraftfahrzeugen ist aus zahllosen Veröffentlichungen und praktischen Beispielen bekannt. In bestimmten Fällen werden an einem oder mehreren Punkten des Gurtbandes Gegenstände angebracht, wobei je nach Art der Befestigung der Gegenstände eine Schwächung des Gurtbandmaterials auftreten kann, so daß sich die geforderte Bruchlast des Gurtbandes möglicherweise nicht über die gesamte Breite im vorgeschriebenen Rahmen halten läßt. Derartige Gegenstände sind z.B. sogenannte Halteknöpfe, die eine über den Punkt der Anbringung hinaus gehende Bewegung, beispielsweise einer Gurtzunge verhindern sollen. Daneben gibt es beispielsweise auch Mikrofone für Freisprechanlagen in Kraftfahrzeugen, die auf Sicherheitsgurten an einem oder mehrer Punkten angebracht sind, wobei durch die Anbringung Fäden insbesondere Kettfäden des Gurtbandes so verletzt werden, daß die Bruchlast des Gurtbandes reduziert ist.

Es ist eine Aufgabe der Erfindung, ein gewebtes Gurtband, insbesondere für Sicherheitsgurte in Kraftfahrzeugen, welches für das Aufbringen von Applikationen im Verlauf des Gurtbandes geeignet ist, sowie derartige Sicherheitsgurte selbst vorzuschlagen, bei denen die aus dem Stand der Technik bekannten Nachteile vermieden oder zumindest stark reduziert sind.

Ein derartiges Gurtband ist aus den DE 10 205 937 A gemäß der Oberbegriff des Anspruchs 1 bekannt.

Die Aufgabe wird gelöst mit einem gewebten Gurtband gemäß Anspruch 1. Die erste Gruppe von Kettfäden mit einer höheren Dehnung wird vorteilhafterweise in einem Bereich vorgesehen, in dem Applikationen aufgebracht werden sollen. Aufgrund der höheren Dehnung der entsprechenden Kettfäden ist jedoch eine, eventuell durch die Applikation verursachte Schwächung der entsprechenden Kettfäden und damit Bruchlastreduzierung derart kompensiert, daß bei einer Belastung des Gurtbandes beide Gruppen von Kettfäden die erforderliche Bruchlast haben. Hierbei wird vorteilhafterweise die Differenz der Dehnungen der Kettfäden der ersten Gruppe und der Kettfäden der zweiten Gruppe so gewählt, daß das Gurtband bei einer Zugbelastung aller Fäden gleichmäßig der Zugkraft entgegenwirkt. Hat beispielsweise eine durch Laserschweißen erreichte Applikation z.B. eines Mikrofons auf das erfindungsgemäße Gurtband eine Schwächung der Kettfäden der ersten Gruppe verursacht, so ist diese Schwächung insofern für die ordnungsgemäße Funktion des Gurtbandes ohne Belang, da durch die gewählte höhere Dehnung der Kettfäden der ersten Gruppe eine entsprechende Schwächung der Bruchlast kompensiert ist.

Das Gurtband enthält erfindungsgemäß Kettfäden einer dritten Gruppe, die elektrisch leitfähige Mittel aufweisen. Dadurch ist eine Versorgung bzw. Ankopplung von elektrischen Geräten möglich, die an irgendeiner Stelle des Gurtbandes im Bereich der Kettfäden der ersten Gruppe angeordnet sind. Die elektrischen Geräte können beispielsweise Mikrofone, Sensoren, Meß-Steuer- und Regelgeräte und dergleichen sein.

In einer vorteilhaften Weiterbildung der Erfindung weisen die Kettfäden der ersten Gruppe elektrisch leitfähige Mittel auf. Damit haben die Kettfäden mit höherer Dehnung gleichzeitig eine Zweitfunktion, nämlich elektrische Energie zu leiten. Die Kombination der Eigenschaften erhöhte Dehnung und elektrische Leitfähigkeit vereinfacht die gesamte Struktur des erfindungsgemäßen Gurtbandes.

In einer anderen vorteilhaften Weiterbildung der Erfindung sind die elektrisch leitfähigen Mittel auf ihrer Oberfläche elektrisch isoliert. Man muß sich auch bei - in Schußrichtung gesehen - beabstandeten leitfähigen Kettfäden nicht auf die durch den Abstand gegebene Isolierung verlassen, sondern kann aufgrund der individuellen Isolierung der Kettfäden elektrisch leitende Mittel sehr eng beieinander führen. Es hat sich in vorteilhafter Weise gezeigt, daß eine Lackierung der elektrisch leitfähigen Mittel sehr kostengünstig und verläßlich hergetellt werden kann, wobei sogar eine farblich abgestimmte Lackierung erreichbar ist.

In einer besonders vorteilhaften weiteren Ausbildung der Erfindung ist das Gurtband derart gestaltet, daß die elektrisch leitfähigen Mittel um die Kettfäden gewickelt sind. Diese Konstruktion der mit elektrisch leitfähigen Mitteln versehenen Kettfäden als Wicklung hat sehr große Vorteile, insbesondere beim Schrumpfen und/oder Verstrecken des Gurtbandes. Die erfindungsgemäß spiralförmig um die Kettfäden gewickelten elektrisch leitfähigen Mittel, beispielsweise Leiterkabel mit rechteckigem Querschnitt machen Längsbewegungen der Kettfäden in Kettfadenlängsrichtung mit, ohne selbst einer nennenswerten Zugbelastung ausgesetzt zu werden, die ein Abreißen der elektrisch leitfähigen Mittel verursachen könnte. Es kann in vorteilhafter Weise individuell auf den Anwendungsfall die Steigung der Wicklungen nach einem vorbestimmten Wert eingestellt werden.

Eine vorteilhafte Alternative der Ausbildung der elektrisch leitfähigen Mittel, die an den Kettfäden der ersten oder dritten Gruppe angeordnet sind, kann dadurch erreicht werden, daß als elektrisch leitfähige Mittel feiner, verkräuselter Draht innerhalb von als Stapelfasergemeinschaft ausgebildeten Kettfäden angeordnet ist. Auch diese Konstruktion der elektrisch leitfähigen Mittel erlaubt eine Kompensation von Schrumpf- und Dehnbewegungen derart, daß die elektrische Leitfähigkeit nicht abreist.

In einer vorteilhaften Weiterbildung der Erfindung werden die Kettfäden, die elektrisch leitfähige Mittel aufweisen im Inneren des Gurtbandes sozusagen "versteckt". Dies hat den großen Vorteil, daß die Kettfäden mit elektrisch leitfähigen Mitteln einerseits von außen nicht sichtbar sind und andererseits gegen mechanische und korrosive Einflüsse von außen geschützt sind.

In einer vorteilhaften Weiterbildung des erfindungsgemäßen Gurtbandes trägt es an einer oder mehreren Stellen im Bereich der Kettfäden der ersten Gruppe ein oder mehrere elektrische(s) Gerät(e), insbesondere ein(e) Mikrofon(e), Sensor(en), Steuer- oder Regelgerät(e). So kann an jeder beliebigen Stelle im Längsverlauf des Gurtbandes ein für die jeweilige Anordnung zweckmäßiges elektrisches Gerät angeordnet werden. Beispielsweise ein Mikrofon für eine Freisprechanlage, für ein Telefon oder für ein Diktiergerät, oder ein Meßgerät für die Überwachung des Gesundheitszustandes eines Passagiers eines Kraftfahrzeugs, wie Pulsfrequenz, Temperatur etc. oder eine Beleuchtungseinrichtung oder ein Lautsprecher sein.

Weitere Vorteile und Merkmale der Erfindung sind den Unteransprüchen zu entnehmen.

Zum besseren Verständnis der Erfindung wird diese nun in beispielhafter Weise anhand von Zeichnungen kurz beschrieben.
- Fig. 1: zeigt stark schematisiert und unmaßstäblich vergrößert eine Draufsicht auf ein erfindungsgemäßes Gurtband.
- Fig. 2: zeigt ein bereits aus Fig. 1 bekanntes Gurtband mit einem darauf angebrachten Mikrofon.
- Fig. 3: zeigt in starker unmaßstäblicher Vergrößerung einen Kettfaden mit einem darumgewickelten elektrisch leitfähigem Mittel.

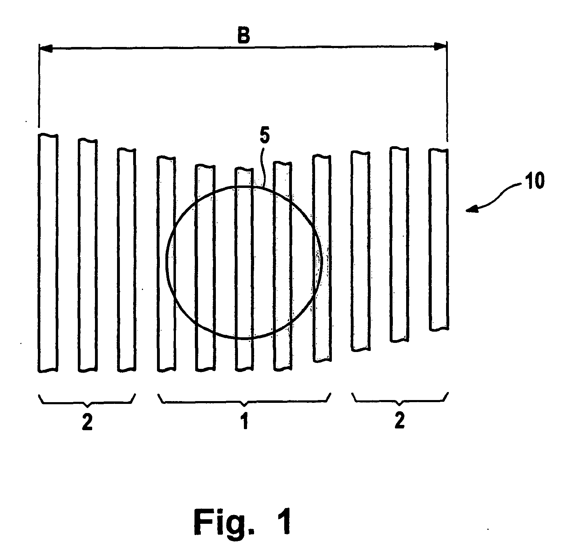

Fig. 1 zeigt sehr stark schematisiert ein Gurtband 10 mit einer Breite B, wobei über die äußeren Bereiche - natürlich nur in symbolhaft gewählter Anzahl - Kettfäden 2 einer bestimmten Dehnung verlaufen, wogegen in einem Mittenbereich, der hier beispielhaft gewählt ist, Kettfäden 1 mit einer höheren Dehnung als die der Kettfäden 2 verlaufen. Der in Fig. 1 gezeigte nur sehr kurze Abschnitt eines erfindungsgemäßen Gurtbandes 10 hat hier einen beispielhaft gewählten sehr breiten mittleren Bereich, in dem Kettfäden 1 mit höherer Dehnung verlaufen. Selbstverständlich ist diese Darstellung nur aus Gründen der Klarheit so stark überzeichnet. Tatsächlich enthält ein entsprechendes Gurtband Hunderte von Kettfäden über die Gurtbandbreite B, die auch wesentlich feiner sind, als die hier beispielhaft gezeigten Kettfäden 1 und 2. Nur zur Orientierung einer möglicherweise aufbringbaren Applikation ist in der Mitte des Gurtbandes 10 ein Kreis mit dem Bezugszeichen 5 angelegt. Selbstverständlich ist dies auch nur eine qualitative Angabe.

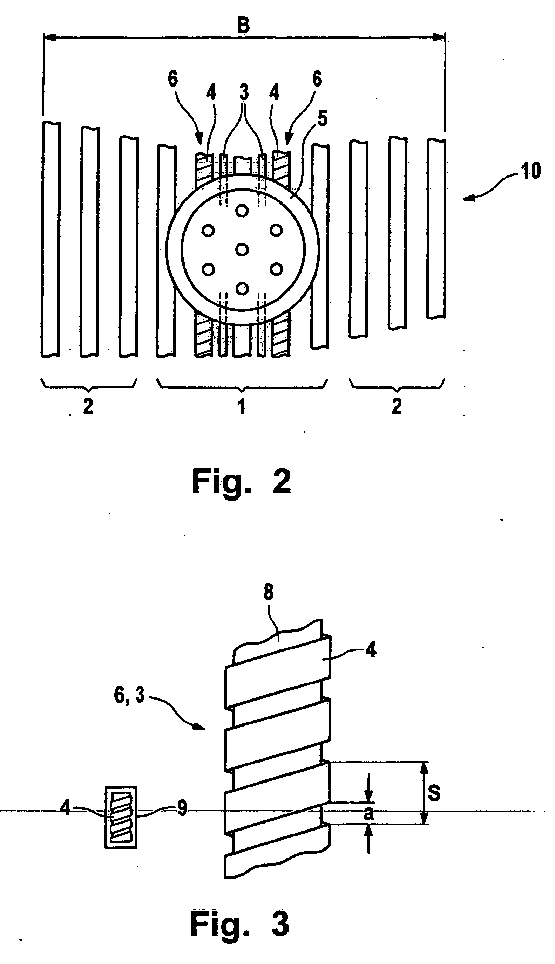

Fig. 2 zeigt das bereits als Fig. 1 bekannte Gurtband 10, wobei in der Mitte im Bereich der Kettfäden 1 mit höherer Dehnung ein symbolhaft dargestelltes Mikrofon 5 zu erkennen ist, welches über Kettfäden 6, die zur Gruppe der Kettfäden 1 gehören, jedoch elektrisch leitfähige Mittel 4 tragen angeschlossen ist. Hier sind beispielhaft zwei Kettfäden 6 dargestellt, die die gleiche Dehnung haben wie die Kettfäden 1, jedoch zusätzlich mit elektrisch leitfähigen Mitteln 4, auf die im Folgenden noch eingegangen wird, versehen sind. Alternativ kann das in Fig. 2 beispielhaft dargestellte Mikrofon 5 mit Kettfäden 3, die zwischen den Kettfäden 1 zusätzlich eingelegt dargestellt sind, versorgt werden. Hierbei soll darauf hingewiesen werden, daß die Kettfäden 3 ebenfalls - hier nicht besonders hervorgehobene - elektrische leitfähige Mittel tragen, jedoch nicht unbedingt die Querschnitte und anderen Parameter der Kettfäden 1 aufweisen müssen.

Fig. 3 zeigt in stark vergrößerter Darstellung einen Kettfaden 3 oder 6, wobei der Kettfaden 6 zur Gruppe der Kettfäden 1 gehört. Die Kontruktion des in Fig. 3 in einem kurzen abgebrochenen Abschnitt gezeigten Kettfadens ist hier auch nur rein qualitativ zu sehen. Ein Kettfadenkern 8 ist von einem in einem rechteckigen Querschnitt - siehe die schematische Darstellung links des Kettfadens 6, 3 von Fig. 3 - versehen, wobei der Kern 8 beispielsweise aus PET bestehen kann, wogegen das elektrisch leitende Mittel 4 aus einer günstigen elektrisch leitfähigen Legierung gewählt ist.

In einer vorteilhaften zusätzlichen Ausbildung ist, wie in Fig. 3 auf der linken Seite gezeigt ist, das elektrisch leitfähige Mittel 4 mit einer Isolierung 9 versehen, die beispielsweise aus einem Lack besteht. Auch hier sind die Dimensionen nur qualitativ skizziert. Die Wicklungen des elektrisch leitfähigen Mittels 4 haben, wie in Fig. 3 dargestellt ist, eine Wickelsteigung S, wodurch sich im Zusammenhang mit der Breite des als Band ausgebildeten elektrisch leitfähigen Mittels 4 ein Abstand a zwischen den einzelnen Windungen ergibt. Abhängig von der für das erfindungsgemäße Gurtband vorgesehenen, nach oder beim Weben zu erfolgenden Streckung oder Schrumpfung des Gurtbandes wird, wenn es geschrumpft wird, eine größere Steigung S und wenn es gestreckt wird, eine kleinere Steigung S gewählt werden, so daß sich jeweils der Abstand a so einstellt, daß sich keine Stauchung oder Ruptur des elektrisch leitfähigen Mittels 4 ergeben kann.

Selbstverständlich erkennt der Fachmann beim Betrachten der eben beschriebenen Figuren sofort, daß der Übersichtlichkeit halber die Schußfäden des erfindungsgemäßen Gurtbandes 10 nicht dargestellt sind. Tatsächlich ist ja das wirkliche Aussehen eines Gurtbandes oft dergestalt, daß die Kettfäden das Aussehen eines Gurtbandes bestimmen, da die Schußfäden in der Regel gar nicht zu erkennen sind. Die in Fig. 2 schemenhaft dargestellten Kettfäden mit elektrisch leitfähigen Mitteln sind jedoch entgegen der Darstellung von Fig. 2 vorteilhafterweise tatsächlich im Inneren des Gurtbandes versteckt, so daß sie einerseits nicht sichtbar sind und andererseits von Verletzungen und Einflüssen von außen her geschützt sind. In dem hier beschriebenen Ausführungsbeispiel sind jeweils 2 Kettfäden mit elektrisch leitfähigen Mitteln dargestellt. Es können dagegen tatsächlich wesentlich mehr derartige Kettfäden sein, je nach dem, welche Art und Menge von elektrischen Signalen geführt werden sollen.

Die durch die Kettfäden mit elektrisch leitfähigen Mitteln realisierten Leiterkabel werden also wunschgemäß nur in definierten Bereichen an die Oberfläche des Gurtbandes treten und dort beispielsweise mit den entsprechenden elektrischen Geräten elektrisch verbunden. Darauf kann dann mittels Lasertechnik beispielsweise eine Schutzkappe oder ein Gehäuse eines elektrischen Geräts, beispielsweise eines Mikrofons aufgeschweißt werden, wobei, wie bereits mehrmals betont, aufgrund der erfindungsgemäßen Ausbildung des gewebten Gurtbandes eine bei fertiggestelltem Gurtband über die Breite des Gurtbandes gleichmäßige Bruchlast der Kettfäden erreicht ist. Es sei auch noch erwähnt, daß die Anbringung eines Geräts auf der Oberfläche des erfindungsgemäßen Gurtbandes nicht nur auf einer Seite, sondern auch auf beiden Seiten möglich ist.

Der erfindungsgemäße Autosicherheitsgurt mit eingewebten elektrisch leitfähigen Kettfäden ist darüberhinaus geeignet, bei entsprechender Anordnung von einschlägigen Meßgeräten die Messung medizinischer Daten eines Passagiers, wie beispielsweise Pulsfrequenz, Blutdruck, Temperatur, etc. zu messen. Daneben ist er für die Out-Off-Position-Technologie von Vorteil, da die Erfassung der aktuellen Position oder Lage eines Fahrgastes, die Körpergröße, Gewicht, etc. ermöglicht wird und gegebenenfalls eine individuell auf die aktuelle Situation angepaßte im Kollisionsfall erforderliche Entwicklung eines Airbags im Fahrgastraum gesteuert werden kann.

Daneben ist noch eine zusätzliche Kontrollfunktion mit dem erfindungsgemäßen Gurtband möglich, nämlich das Abprüfen der Funktionstüchtigkeit des Gurtbandes, um beispielsweise nach Verschleiß den rechtzeitigen Austausch und Ersatz zu veranlassen.

## Patentansprüche

1. Gewebtes Gurtband, für Sicherheitsgurte in Kraftfahrzeugen, mit einer ersten Gruppe von Kettfäden (1) und einer zweiten Gruppe von Kettfäden (2), wobei die Kettfäden (1) der ersten Gruppe eine höhere Dehnung als die Kettfäden (2) der zweiten Gruppe aufweisen, **dadurch gekennzeichnet, daß** darin Kettfäden (3) einer dritten Gruppe sind, die elektrisch leitfähige Mittel (4) aufweisen.

2. Gurtband nach Anspruch 1, **dadurch gekennzeichnet, daß** die Kettfäden (1) der ersten Gruppe elektrisch leitfähige Mittel (4) aufweisen.

3. Gurtband nach Anspruch 2, **dadurch gekennzeichnet, daß** die elektrisch leitfähigen Mittel (4) auf ihrer Oberfläche elektrisch isoliert sind.

4. Gurtband nach Anspruch 3, **dadurch gekennzeichnet, daß** die elektrisch leitfähigen Mittel (4) auf ihrer Oberfläche lackiert sind.

5. Gurtband nach Anspruch 4, **dadurch gekennzeichnet, daß** die elektrisch leitfähigen Mittel (4) um die Kettfäden (1; 3) gewickelt sind.

6. Gurtband nach Anspruch 5, **dadurch gekennzeichnet, daß** die Steigung (S) der Wicklungen nach einem vorbestimmten Wert eingestellt sind.

7. Gurtband nach Anspruch 4, **dadurch gekennzeichnet, daß** als elektrisch leitfähige Mittel feiner verkräuselter Draht innerhalb von als Stapelfasergemeinschaft ausgebildeten Kettfäden angeordnet ist.

8. Gurtband nach einem der vorhergehenden Ansprüche, **dadurch gekennzeichnet, daß** Kettfäden (1; 3), die elektrisch leitfähige Mittel aufweisen im Inneren des Gurtbandes "versteckt" sind.

9. Gurtband nach einem der Ansprüche 2 bis 8, **dadurch gekennzeichnet, daß** es an einer oder mehreren Stellen im Bereich der Kettfäden (2) der ersten Gruppe ein oder mehrere elektrische(s) Gerät(e), insbesondere ein(en) Mikrofon(e) (5), Sensor(en), Steuer- oder Regelgerät(e) trägt.

## Claims

1. A woven webbing for automotive seat belts, **characterized by** it comprising a first group of warp threads (1) and a second group of warp threads (2), the warp threads (1) of the first group having a higher extensibility than the warp threads (2) of the second group, **characterized in that** warp threads (3) of a third group are included therein which comprise electrically conductive means (4).

2. The webbing as set forth in claim 1, **characterized in that** the warp threads (1) of the first group comprise electrically conductive means (4).

3. The webbing as set forth in claim 2, **characterized in that** the electrically conductive means (4) are electrically insulated on their surface.

4. The webbing as set forth in claim 3, **characterized in that** the electrically conductive means (4) are varnished on their surface.

5. The webbing as set forth in claim 4, **characterized in that** the electrically conductive means (4) are wound around the warp threads (1; 3).

6. The webbing as set forth in claim 5, **characterized in that** the pitch S of the windings is set to a predefined value.

7. The webbing as set forth in claim 4, **characterized in that** finely curled wire is arranged as the electrically conductive means within warp threads forming a staple common fiber.

8. The webbing as set forth in any of the preceding claims, **characterized in that** the warp threads comprising electrically conductive means are concealed in the interior of the webbing.

9. The webbing as set forth in any of the claims 2 to 8, **characterized in that** one or more electrical device(s), especially microphone(s), sensor(s), controller(s) is/are applied to one or more locations in the region of the warp threads of the first group.

## Revendications

1. Sangle tissée pour ceintures de sécurité de voitures automobiles, comportant un premier groupe de fils de chaîne (1) et un second groupe de fils de chaîne (2), les fils de chaîne (1) du premier groupe présentant une extension plus grande que les fils de chaîne (2) du second groupe, **caractérisée en ce qu'**elle comporte des fils de chaîne (3) d'un troisième groupe qui présentent des moyens électriquement conducteurs (4).

2. Sangle selon la revendication 1, **caractérisée en ce que** les fils de chaîne (1) du premier groupe présentent des moyens électriquement conducteurs (4).

3. Sangle selon la revendication 2, **caractérisée en ce que** les moyens électriquement conducteurs (4) sont électriquement isolés sur leur surface.

4. Sangle selon la revendication 3, **caractérisée en ce que** les moyens électriquement conducteurs (4) sont laqués sur leur surface.

5. Sangle selon la revendication 4, **caractérisée en ce que** les moyens électriquement conducteurs (4) sont enroulés autour des fils de chaîne (1; 3).

6. Sangle selon la revendication 5, **caractérisée en ce que** le pas (S) des enroulements est réglé d'après une valeur déterminée.

7. Sangle selon la revendication 4, **caractérisée en ce que** du fil métallique crépu fin est disposé comme moyen électriquement conducteur à l'intérieur de fils de chaîne formés comme collectif de fils discontinus.

8. Sangle selon l'une quelconque des revendications précédentes, **caractérisée en ce que** les fils de chaîne (1; 3) qui présentent les moyens électriquement conducteurs sont "cachés" à l'intérieur de la sangle.

9. Sangle selon l'une quelconque des revendications 2 à 8, **caractérisée en ce qu'**elle porte en un ou plusieurs endroits au niveau des fils de chaîne (2) du premier groupe un ou plusieurs appareil(s) électrique(s), notamment un(des) microphone(s) (5), capteur(s), appareil(s) de commande ou de régulation.
